# EUROPÄISCHE PATENTSCHRIFT

(11) **EP 2 518 866 B1**
(45) Veröffentlichungstag und Bekanntmachung des Hinweises auf die Patenterteilung: **06.08.2014**
(21) Anmeldenummer: 12166081.5
(22) Anmeldetag: 27.04.2012
(51) Int. Cl.: H02K 3/38, H02K 3/40

(54) **Isolierkappe für einen Wickelkopf einer mit Hochspannung arbeitenden elektrischen Maschine sowie Maschine mit einer solchen Isolierkappe**
Insulating cap for an end winding of an electrical machine working at high voltage and machine having such an insulating cap
Clapet d'isolation pour une tête d'enroulement d'une machine électrique fonctionnant à haute tension ainsi que machine dotée d'un tel clapet d'isolation

(30) Priorität: 29.04.2011 CH 7322011; 20.05.2011 CH 8612011
(43) Veröffentlichungstag der Anmeldung: 31.10.2012
(73) Patentinhaber: ALSTOM Renewable Technologies, 38100 Grenoble (FR)
(72) Erfinder: Huwyler, Markus, 5630 Muri (CH); Köpfler, Andreas, 79761 Waldshut (DE); Klamt, Thomas, 5107 Schinznach-Dorf (CH)
(74) Vertreter: Pesce, Michele

(56) Entgegenhaltungen:
- EP-A1- 1 821 389
- EP-A1- 1 903 662
- EP-A1- 2 278 688
- WO-A1-2004/038735
- WO-A1-2006/056542
- JP-A- 57 160 342

## Beschreibung

### TECHNISCHES GEBIET

Die vorliegende Erfindung bezieht sich auf das Gebiet der elektrischen Maschinen. Sie betrifft eine Isolierkappe für einen Wickelkopf gemäss dem Oberbegriff des Anspruchs 1. Sie betrifft weiterhin eine elektrische Maschine mit einem Wickelkopf mit solchen Isolierkappen.

### STAND DER TECHNIK

Die elektrischen Wicklungen (des Rotors oder Stators) von mit Hochspannung arbeitenden elektrischen Maschinen, z.B. elektrischen Generatoren oder Motoren, insbesondere Schleifringläufer-Motoren, weisen an den Enden Wickelköpfe auf, in denen die aus den Nuten der Blechpakete hervorstehenden Wicklungsstäbe paarweise miteinander leitend verbunden werden. Die elektrische Verbindung erfolgt häufig über Ösen, die mit den von der Isolation befreiten Leiterenden der Wicklungsstäbe verlötet werden. Die Verbindungsstellen werden dann durch Aufschieben von speziellen Isolierkappen elektrisch isoliert. Beispiele für solche Wickelköpfe sind aus den Druckschriften DE 1 281 015 B, DE 42 37 079 A1, EP 1 821 389 A1 oder US 4,309,636 A bekannt.

Es sind im Stand der Technik Isolierkappen für Wickelköpfe von mit Hochspannung arbeitenden elektrischen Maschinen bekannt, die sich auf Hochspannungspotenzial befinden. Derartige Isolierkappen können auf der Aussenseite nicht geerdet werden.

Es ist weiterhin bekannt, Isolierkappen auf der Innenseite mit einem Gradientenmaterial (siehe z.B. die WO 2004038735 A1) zu versehen, um die elektrische Feldstärke im Inneren der Isolierkappe zu reduzieren. Isolierkappen dieses Typs befinden sich auf der Aussenseite jedoch nach wie vor auf Hochspannung, so dass die Aussenfläche nicht geerdet werden kann.

Es wäre jedoch aus verschiedenen elektrischen und mechanischen Gründen vorteilhaft, die Aussenfläche solcher Isolierkappen erden zu können. Hierfür wären Isolierkappen erforderlich, die auf der Innenseite auf Hochspannung liegen und auf der Aussenseite ein beliebiges Spannungspotenzial zwischen Hochspannung und Erdpotenzial einnehmen können.

### DARSTELLUNG DER ERFINDUNG

Es ist daher eine Aufgabe der Erfindung, Isolierkappen der eingangs genannten Art zu schaffen, die eine Erdung der Aussenfläche ermöglichen.

Es ist weiterhin eine Aufgabe der Erfindung, eine elektrische Maschine mit einem Wickelkopf mit derartigen Isolierkappen anzugeben.

Diese und andere Aufgaben werden durch die Gesamtheit der Merkmale der Ansprüche 1 und 7 gelöst.

Die Erfindung geht aus von einer Isolierkappe für den Wickelkopf einer mit Hochspannung arbeitenden elektrischen Maschine, welcher Wickelkopf eine Mehrzahl von aus Wicklungsnuten herausstehenden, isolierten Wicklungsstäben umfasst, die an ihren Enden paarweise elektrisch leitend miteinander verbunden sind, wobei der Bereich der elektrischen Verbindung jeweils durch eine mit einer Öffnung darüber geschobene Isolierkappe nach aussen isoliert ist. Sie zeichnet sich dadurch aus, dass die Isolierkappe im Inneren Mittel aufweist, welche einen graduellen Abbau des im Bereich der elektrischen Verbindung hohen elektrischen Feldes zur auf Erdpotential liegenden Aussenseite der Isolierkappe ermöglichen.

Die Erfindung ist dadurch gekennzeichnet, dass die graduellen Abbaumittel eine Gradientenschicht aus einem Gradientenmaterial umfassen, welche bei aufgeschobener Isolierkappe vom Bereich der elektrischen Verbindung bis zur Öffnung der Isolierkappe reicht.

Die Erfindung zeichnet sich dadurch aus, dass die Isolierkappe eine zentrale Isolierschicht aufweist, welche auf der Aussenseite mit einer äusseren Leiter- oder Halbleiterschicht versehen ist, dass auf der Innenseite der zentralen Isolierschicht im Bereich der elektrischen Verbindung eine innere Leiter- oder Halbleiterschicht angeordnet ist, und dass die Gradientenschicht von der inneren Leiter- oder Halbleiterschicht bis zur Öffnung der Isolierkappe reicht.

Insbesondere überlappt die Gradientenschicht die innere Leiter- oder Halbleiterschicht in einer begrenzten Überlappungszone.

Eine Ausgestaltung ist dadurch gekennzeichnet, dass die Gradientenschicht weitgehend in die zentrale Isolierschicht der Isolierkappe eingebettet ist.

Eine andere Ausgestaltung ist dadurch gekennzeichnet, dass die Gradientenschicht weitgehend auf der zentralen Isolierschicht der Isolierkappe angeordnet ist.

Die erfindungsgemässe, mit Hochspannung arbeitende elektrische Maschine, welche eine einen Wickelkopf aufweisende Wicklung umfasst, ist dadurch gekennzeichnet, dass der Wickelkopf mit Isolierkappen gemäss der Erfindung ausgerüstet ist.

Vorzugsweise ist wenigstens eine Isolierkappe des Wickelkopfes auf der Aussenseite geerdet.

Insbesondere sind alle Isolierkappen des Wickelkopfes auf der Aussenseite bzw. der gesamte Wickelkopf geerdet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen, vereinfachten Seitenansicht zwei Wicklungsstäbe eines Wickelkopfes, die an den Enden miteinander elektrisch verbunden sind und durch eine aufzuschiebende Isolierkappe nach aussen isoliert werden;
- Fig. 2: den Schnitt durch eine Isolierkappe gemäss einem ersten Ausführungsbeispiel der Erfindung; und
- Fig. 3: den Schnitt durch eine Isolierkappe gemäss einem zweiten Ausführungsbeispiel der Erfindung.

### WEGE ZUR AUSFÜHRUNG DER ERFINDUNG

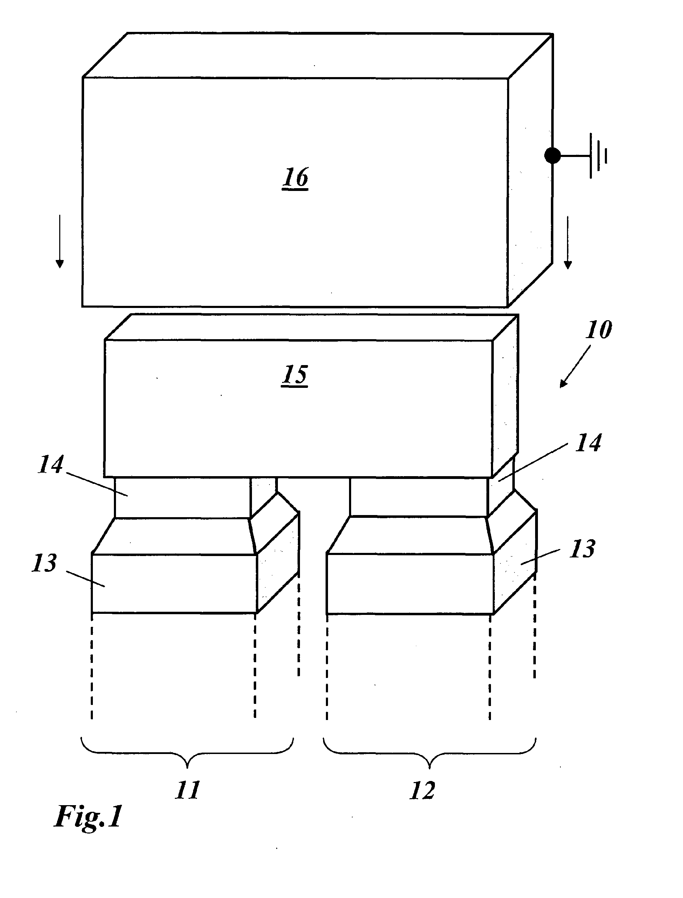

In Fig. 1 sind in einer perspektivischen, vereinfachten Seitenansicht zwei Wicklungsstäbe 11 und 12 eines Wickelkopfes 10 dargestellt, die an den Enden miteinander elektrisch verbunden sind und durch eine aufzuschiebende Isolierkappe 16 nach aussen isoliert werden. Die Wicklungsstäbe 11 und 12 sind zur Isolierung gegen das (nicht dargestellte) Blechpaket, in dessen Nuten sie untergebracht sind, mit einer äusseren Isolation 13 umgeben, die an den Enden der Wicklungsstäbe 11, 12 entfernt ist, um die zentralen elektrischen Leiter 14 der Wicklungsstäbe 11, 12 für die elektrische Verbindung freizulegen. Für die elektrische Verbindung wird eine spezielle Öse 15 eingesetzt, die mit den freigelegten Leiterenden der Wicklungsstäbe 11, 12 beispielsweise verlötet ist. Zur Isolierung der elektrischen Verbindung 14, 15 ist die Isolierkappe 16 vorgesehen.

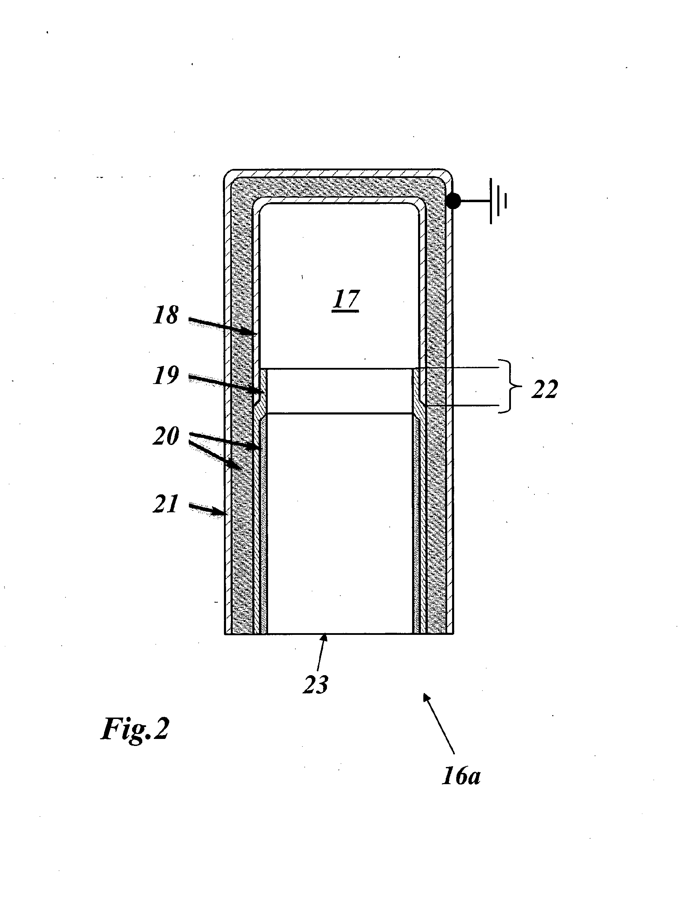

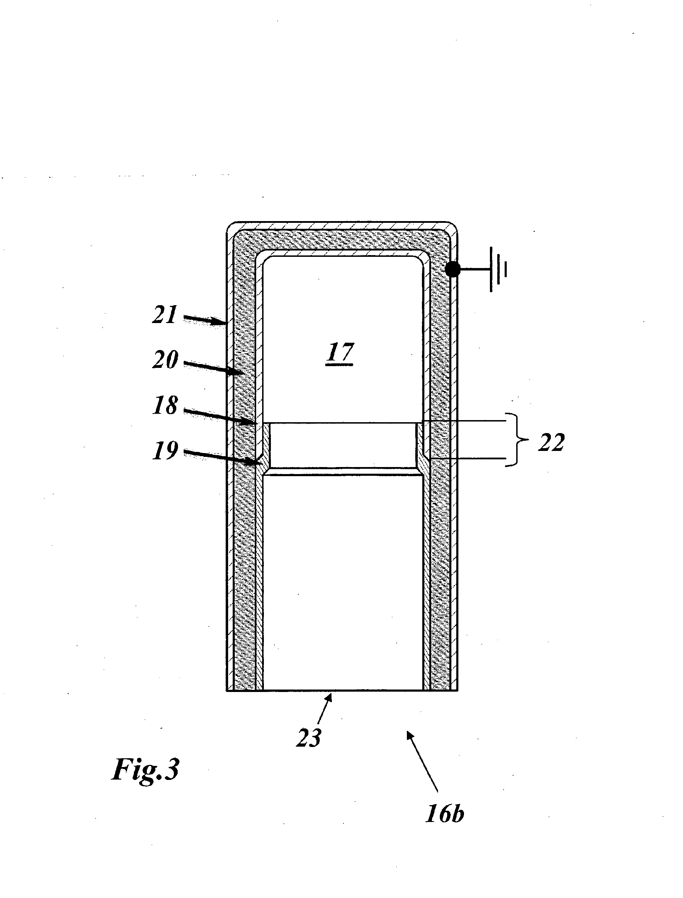

Gemäss der Erfindung ist die Isolierkappe 16 so ausgebildet, dass die elektrische Verbindung 14, 15 sich auf Hochspannungspotenzial befinden kann, während die Aussenseite der Isolierkappe 16 auf Erdpotenzial oder einem beliebigen zwischen Erdpotenzial und Hochspannungspotenzial liegenden Potenzial gehalten werden kann. Dies wird durch spezielle Mittel erreicht, die im Inneren der Isolierkappe 16 vorgesehen werden. Diese spezielle Mittel umfassen eine Gradientenschicht, die auf unterschiedliche Weise im Inneren der Isolierkappe 16 angeordnet werden kann. Zwei Ausführungsbeispiele dieser Anordnung sind in den Fig. 2 und 3 im Längsschnitt dargestellt.

Fig. 2 zeigt eine Isolierkappe 16a, die im Längsschnitt ein einen Innenraum 17 bildendes U-förmiges Profil aufweist und an einer Seite mit einer Öffnung 23 versehen ist. Die Isolierkappe 16a weist eine zentrale Isolierschicht 20 auf, welche auf der Aussenseite vollflächig mit einer äusseren Leiter- oder Halbleiterschicht 21 bedeckt ist. Auf der Innenseite der zentralen Isolierschicht 20 ist in dem Bereich, der die elektrische Verbindung 14, 15 aufnimmt, eine innere Leiter- oder Halbleiterschicht 18 angeordnet. Des Weiteren ist eine Gradientenschicht 19 vorgesehen, die von der inneren Leiter- oder Halbleiterschicht 18 bis zur Öffnung 23 der Isolierkappe 16a reicht. Die Gradientenschicht 19 ist in diesem Ausführungsbeispiel weitgehend in die zentrale Isolierschicht 20 der Isolierkappe 16a eingebettet. Sie überlappt die innere Leiter- oder Halbleiterschicht 18 in einer begrenzten Überlappungszone 22.

Im Ausführungsbeispiel der Fig. 3 ist die Gradientenschicht 19 der Isolierkappe 16b weitgehend auf der Oberfläche der zentralen Isolierschicht 20 der Isolierkappe 16b angeordnet. Auch hier ist eine begrenzte Überlappungszone 22 mit der inneren Leiter- oder Halbleiterschicht 18 vorgesehen.

Die Gradientenschicht 19 bewirkt (im Betrieb) ein elektrisches Gradientenfeld, das von der Hochspannung im Bereich der elektrischen Verbindung 14, 15 bis zur Aussenfläche 21 der Isolierkappe 16a,b reicht und damit ein frei wählbares Potenzial auf der Aussenfläche 21 ermöglicht. Als Material für die Gradientenschicht 19 kommt beispielsweise ein Gradientenmaterial in Frage, wie es in der eingangs genannten Druckschrift WO 2004038735 A1 offenbart ist.

Mit einer derartigen Isolierkappe 16a,b wird eine Erdung einzelner Kappen, aber auch eine Erdung des gesamten Wickelkopfes möglich. Wenn beispielsweise die Oberfläche der Wicklungsstäbe innerhalb der Maschine geerdet ist, wird dadurch das Risiko von unerwünschten Teilentladungen in der Luft reduziert oder ganz beseitigt.

Ein weiterer Vorteil besteht darin, dass die geerdeten Isolierkappen eine mechanische Fixierung an geerdeten Teilen der Maschine ermöglichen. Hierdurch wird die mechanische Stabilität deutlich verbessert und die Konstruktion des Wickelkopfes vereinfacht.

Weitere Vorteile sind, gerade im Zusammenhang mit Hochspannungs-Maschinen wie Generatoren, Motoren oder Schleifringläufermotoren, ein verbesserter Wirkungsgrad, eine höhere Verfügbarkeit und - bei Schleifringläufermotoren - eine erhöhte Betriebssicherheit unter kritischen Umgebungsbedingungen. Je nach Typ der Maschine können die erfindungsgemässen Isolierkappen bei der Rotorwicklung und/oder der Statorwicklung eingesetzt werden.

Ein weiterer Vorteil der erfindungsgemässen Isolierkappen besteht darin, dass mit deren Einsatz ganze Wickelköpfe geerdet werden können:
Bei zahlreichen elektrischen Maschinen besteht während des Betriebs das Risiko,
dass sich in den Wickelköpfen eine Mischung aus Staub und Öl ansammelt, die zu Kriechstrecken und damit zu Isolationsfehlern führen kann.

Üblicherweise sind die Hochspannungswicklungen im Bereich der Blechkörper aussen geerdet. Von den Nuten der Blechkörper des zu den elektrischen Verbindungsstellen der einzelnen Wicklungsstäbe steigt die Spannung auf der Aussenfläche bis zur Hochspannung der Maschine an. Diese Hochspannung auf der Aussenfläche der Wicklung erfordert ausreichende Abstände in Luft zwischen den Wicklungselementen selbst und den Wicklungselementen, die sich auf Erdpotenzial befinden oder zu einer anderen Phase gehören. Wenn die Maschine und speziell die Wicklung verschmutzt, besteht ein gewisses Risiko von Teilentladungen und Kriechstrecken auf der Wicklung. Dies kann zu Fehlern und zum Zusammenbruch der Isolierung führen.

Wenn nun die Wickelköpfe insgesamt geerdet werden, kann der Abstand in Luft zwischen den Wicklungselementen im Hinblick auf andere Parameter, insbesondere im Hinblick auf die Kühlung, optimiert werden. Die Luftabstände der Wicklungselemente zu den geerdeten Teilen der Maschine können dann eliminiert oder zumindest drastisch reduziert werden. Auf diese Weise wird die elektrische Maschine fehlertoleranter gegenüber Staub und Feuchtigkeit.

Die Erdung der Wickelköpfe insgesamt kann mit Vorteil unter Einsatz der erfindungsgemässen Isolierkappen verwirklicht werden.

### BEZUGSZEICHENLISTE

- 10: Wickelkopf
- 11,12: Wicklungsstab
- 13: Isolation
- 14: Leiter
- 15: Öse
- 16,16a,b: Isolierkappe
- 17: Innenraum
- 18: innere Leiter- oder Halbleiterschicht
- 19: Gradientenschicht
- 20: Isolierschicht
- 21: äussere Leiter- oder Halbleiterschicht
- 22: Überlappungszone
- 23: Öffnung (Isolierkappe)

## Patentansprüche

1. Isolierkappe (16a,b) für einen Wickelkopf (10) einer mit Hochspannung arbeitenden elektrischen Maschine, welcher Wickelkopf (10) eine Mehrzahl von aus Wicklungsnuten herausstehenden, isolierten Wicklungsstäben (11, 12) umfasst, die an ihren Enden paarweise elektrisch leitend miteinander verbunden sind, wobei der Bereich der elektrischen Verbindung (15) jeweils durch die mit einer Öffnung (23) darüber geschobene Isolierkappe (16a,b) nach aussen isoliert ist, **dadurch gekennzeichnet, dass** die Isolierkappe (16a,b) im Inneren (17) Mittel (19) aufweist, welche einen graduellen Abbau des im Bereich der elektrischen Verbindung hohen elektrischen Feldes zur auf Erdpotential liegenden Aussenseite (21) der Isolierkappe (16a,b) ermöglichen,
dass die graduellen Abbaumittel eine Gradientenschicht (19) aus einem Gradientenmaterial umfassen, welche bei aufgeschobener Isolierkappe (16a,b) vom Bereich der elektrischen Verbindung (15) bis zur Öffnung (23) der Isolierkappe (16a,b) reicht, und
dass die Isolierkappe (16a,b) eine zentrale Isolierschicht (20) aufweist, welche auf der Aussenseite mit einer äusseren Leiter- oder Halbleiterschicht (21) versehen ist, dass auf der Innenseite der zentralen Isolierschicht (20) im Bereich der elektrischen Verbindung (15) eine innere Leiter- oder Halbleiterschicht (18) angeordnet ist, und dass die Gradientenschicht (19) von der inneren Leiter- oder Halbleiterschicht (18) bis zur Öffnung (23) der Isolierkappe (16a,b) reicht.

2. Isolierkappe nach Anspruch 1, **dadurch gekennzeichnet, dass** die Gradientenschicht (19) die innere Leiter- oder Halbleiterschicht (18) in einer begrenzten Überlappungszone (22) überlappt.

3. Isolierkappe nach Anspruch 1 oder 2, **dadurch gekennzeichnet, dass** die Gradientenschicht (19) weitgehend in die zentrale Isolierschicht (20) der Isolierkappe (16a) eingebettet ist.

4. Isolierkappe nach Anspruch 1 oder 2, **dadurch gekennzeichnet, dass** die Gradientenschicht (19) weitgehend auf der zentralen Isolierschicht (20) der Isolierkappe (16b) angeordnet ist.

5. Mit Hochspannung arbeitende elektrische Maschine, welche eine einen Wickelkopf (10) aufweisende Wicklung umfasst, **dadurch gekennzeichnet, dass** der Wickelkopf (10) mit Isolierkappen (16a,b) gemäss einem der Ansprüche 1-4 ausgerüstet ist.

6. Elektrische Maschine nach Anspruch 5, **dadurch gekennzeichnet, dass** wenigstens eine Isolierkappe (16a,b) des Wickelkopfes (10) auf der Aussenseite geerdet ist.

7. Elektrische Maschine nach Anspruch 6, **dadurch gekennzeichnet, dass** alle Isolierkappen (16a,b) des Wickelkopfes (10) auf der Aussenseite geerdet sind.

## Claims

1. Insulating cap (16a,b) for an end winding (10) of an electrical machine working at high voltage, which end winding (10) comprises a plurality of insulated winding bars (11, 12) which protrude from winding slots and are electrically conductively connected to one another in pairs at their ends, wherein the region of the electrical connection (15) is in each case insulated with respect to the outside by the insulating cap (16a,b) which is pushed over said connection with an opening (23), **characterized in that** the insulating cap (16a,b) has means (19) in the interior (17) which enable the high electric field in the region of the electrical connection to be gradually dissipated to the outside (21) of the insulating cap (16a,b) which is at earth potential, **in that** the gradual dissipation means comprise a gradient layer (19) made of a gradient material which, when the insulating cap (16a,b) is pushed on, reaches from the region of the electrical connection (15) to the opening (23) of the insulating cap (16a,b), and **in that** the insulating cap (16a,b) has a central insulating layer (20) which is provided on the outside with an outer conductor layer or semiconductor layer (21), **in that** an inner conductor layer or semiconductor layer (18) is arranged on the inside of the central insulating layer (20) in the region of the electrical connection (15), and **in that** the gradient layer (19) reaches from the inner conductor layer or semiconductor layer (18) to the opening (23) of the insulating cap (16a,b).

2. Insulating cap according to Claim 1, **characterized in that** the gradient layer (19) overlaps the inner conductor layer or semiconductor layer (18) in a limited overlapping zone (22).

3. Insulating cap according to Claim 1 or 2, **characterized in that** the gradient layer (19) is extensively embedded in the central insulating layer (20) of the insulating cap (16a).

4. Insulating cap according to Claim 1 or 2, **characterized in that** the gradient layer (19) is extensively arranged on the central insulating layer (20) of the insulating cap (16b).

5. Electrical machine working at high voltage which comprises a winding having an end winding (10), **characterized in that** the end winding (10) is fitted with insulating caps (16a,b) according to one of Claims 1-4.

6. Electrical machine according to Claim 5, **characterized in that** at least one insulating cap (16a,b) of the end winding (10) is earthed on the outside.

7. Electrical machine according to Claim 6, **characterized in that** all insulating caps (16a,b) of the end winding (10) are earthed on the outside.

## Revendications

1. Capuchon isolant (16a, b) pour tête d'enroulement (10) d'une machine électrique travaillant à haute tension, la tête d'enroulement (10) présentant plusieurs barreaux d'enroulement (11, 12) isolés et débordant hors de rainures d'enroulement, reliés électriquement les uns aux autres par paires à leurs extrémités, le niveau de la liaison électrique (15) étant isolé de l'extérieur par le capuchon isolant (16a, b) glissé par dessus à travers une ouverture (23),
**caractérisée en ce que**
le capuchon isolant (16a, b) présente à l'intérieur (17) des moyens (19) qui permettent une atténuation progressive du champ électrique élevé qui règne au niveau de la liaison électrique jusqu'au côté extérieur (21) du capuchon isolant (16a, b) situé au potentiel de terre,
**en ce que** les moyens d'atténuation progressive comprennent une couche (19) à gradient en un matériau à gradient qui, lorsque le capuchon isolant (16a, b) est placé, s'étend depuis le niveau de la liaison électrique (15) jusqu'à l'ouverture (23) du capuchon isolant (16a, b) et
**en ce que** le capuchon isolant (16a, b) présente une couche isolante centrale (20) dotée sur son côté extérieur d'une couche extérieure (21) conductrice ou semi-conductrice,
**en ce qu'**une couche intérieure (18) conductrice ou semi-conductrice est disposée au niveau de la liaison électrique (15) sur le côté intérieur de la couche isolante centrale (20) et
**en ce que** la couche (19) à gradient s'étend entre la couche intérieure (18) conductrice ou semi-conductrice et l'ouverture (23) du capuchon isolant (16a, b).

2. Capuchon isolant selon la revendication 1, **caractérisé en ce que** la couche (19) à gradient recouvre la couche intérieure (18) conductrice ou semi-conductrice dans une zone limitée de superposition (22).

3. Capuchon isolant selon les revendications 1 ou 2, **caractérisé en ce que** la couche (19) à gradient est largement incorporée dans la couche isolante centrale (20) du capuchon isolant (16a).

4. Capuchon isolant selon les revendications 1 ou 2, **caractérisé en ce que** la couche (19) à gradient est disposée largement sur la couche isolante centrale (20) du capuchon isolant (16b).

5. Machine électrique travaillant à haute tension et comportant un enroulement qui présente une tête d'enroulement (10), **caractérisée en ce que** la tête d'enroulement (10) est équipée de capuchons isolants (16a, b) selon l'une des revendications 1 à 4.

6. Machine électrique selon la revendication 5, **caractérisée en ce qu'**au moins un capuchon isolant (16a, b) de la tête d'enroulement (10) est mis à la terre par son côté extérieur.

7. Machine électrique selon la revendication 6, **caractérisée en ce que** tous les capuchons isolants (16a, b) de la tête d'enroulement (10) sont raccordés à la terre sur leur côté extérieur.
